# EUROPEAN PATENT SPECIFICATION

(11) **EP 2 666 201 B1**
(45) Date of publication and mention of the grant of the patent: **18.10.2017**
(21) Application number: 11856115.8
(22) Date of filing: 19.01.2011
(51) Int. Cl.: H01M 4/92, H01M 4/86, H01M 8/1018

(54) **SHAPE CONTROLLED PALLADIUM AND PALLADIUM ALLOY NANOPARTICLE CATALYST**
FORMGESTEUERTER PALLADIUM- UND PALLADIUMLEGIERUNGSNANOPARTIKELKATALYSATOR
CATALYSEUR SOUS FORME DE NANOPARTICULES DE PALLADIUM ET D'ALLIAGE DE PALLADIUM DE FORME MAÎTRISÉE

(43) Date of publication of application: 27.11.2013
(73) Proprietor: Audi AG, 85045 Ingolstadt (DE)
(72) Inventor: SHAO, Minhua, South Windsor, CT 06074 (US)
(86) International application number: PCT/US2011/021703
(87) International publication number: WO 2012/099583

(56) References cited:
- WO-A1-2009/139747
- WO-A2-2010/123896
- US-A1- 2007 099 064
- US-A1- 2007 218 342
- US-A1- 2010 008 840
- Shuangyin Wang ET AL: "Synthesis of monodisperse palladium nanocubes and their catalytic activity for methanol electrooxidation Highly dispersed Pd nanoparticles on chemically modified graphene with aminophenyl groups for formic acid oxidation Synthesis of monodisperse palladium nanocubes and their catalytic activity for", Chin. Phys. B, 1 January 2010 (2010-01-01), page 106104, XP055330649, Retrieved from the Internet: URL:http://iopscience.iop.org/article/10.1 088/1674-1056/19/10/106104/pdf [retrieved on 2016-12-21]
- NIU W. ET AL.: 'Seed-Mediated Growth of Nearly Monodisperse Palladium Nanocubes with Controllable Sizes' CRYST. GROWTH DES., [Online] vol. 8, no. 12, 25 September 2008, pages 4440 - 4444, XP055091343
- VIDAL-IGLESIAS F.J. ET AL.: 'Pd Adatom Decorated (100) Preferentially Oriented Pt Nanoparticles for Formic Acid Electrooxidation' ANGEWANDTE CHEMIE, [Online] vol. 122, 16 August 2010, pages 7152 - 7155, XP055091353

## Description

### BACKGROUND

A unitized electrode assembly for a fuel cell includes an anode, a cathode and an electrolyte between the anode and cathode. In one example, hydrogen gas is fed to the anode, and air or pure oxygen is fed to the cathode. However, it is recognized that other types of fuels and oxidants can be used. At the anode, an anode catalyst causes the hydrogen molecules to split into protons (H<+>) and electrons (e). The protons pass through the electrolyte to the cathode while the electrons travel through an external circuit to the cathode, resulting in production of electricity. At the cathode, a cathode catalyst causes the oxygen molecules to react with the protons and electrons from the anode to form water, which is removed from the system.

The anode catalyst and cathode catalyst commonly include platinum or a platinum alloy. Platinum is a high-cost precious metal. Much work has been conducted to reduce the platinum loading in the cathode in order to reduce manufacturing costs. Additionally, work has been conducted to improve the kinetics of oxygen reduction in the oxygen-reducing cathode in order to improve the efficiency of the fuel cell.

Document XP055330649, Shuangyin Wang et al., Chin. Phys. B, Vol. 19, Nr. 10, October 2010, page 106104 describes the use of cubic shaped palladium nanoparticles as active particles in an electrochemical environment containing Sodium hydroxide and Methanol.

WO 2009/139747 A1 describes platinum catalytic nanoparticles. To promote the stability of the particles under electrochemical cycles, the platinum atoms at the edges and corners are exchanged by gold atoms.

It is therefore an object of the present invention to provide an improved unitized electrode assembly.

### SUMMARY

This object is solved by an unitized electrode assembly according to claim 1. Preferred embodiments are mentioned in the dependend claims.

A unitized electrode assembly (UEA) for a fuel cell includes an anode electrode, a cathode electrode, an electrolyte and palladium catalytic nanoparticles. The electrolyte is positioned between the cathode electrode and the anode electrode. The palladium catalytic nanoparticles are positioned between the electrolyte and one of the anode electrode and the cathode electrode. The palladium catalytic nanoparticles have a { 100} enriched structure. A majority of the surface area of the palladium catalytic nanoparticles is exposed to the UEA environment.

### BRIEF DESCRIPTION OF THE DRAWINGS

FIG. 1 is a perspective view of a fuel cell repeat unit having a catalyst layer.
FIG. 2 is an enlarged view of the catalyst layer of the fuel cell repeat unit of FIG. 1.
FIG. 3 is a transmission electron microscope (TEM) image of palladium nanoparticles having an enriched { 100} structure.

### DETAILED DESCRIPTION

Palladium nanoparticles for use as a catalyst in a unitized electrode assembly (UEA) of a fuel cell are described herein. The palladium nanoparticles have a {100} enriched structure. Regular or non-shape controlled palladium is unstable in the UEA environment and has a lower oxygen reduction reaction (ORR) activity than platinum. However, palladium nanoparticles having a {100} enriched structure were unexpectedly found to have an activity comparable to carbon supported platinum catalysts.

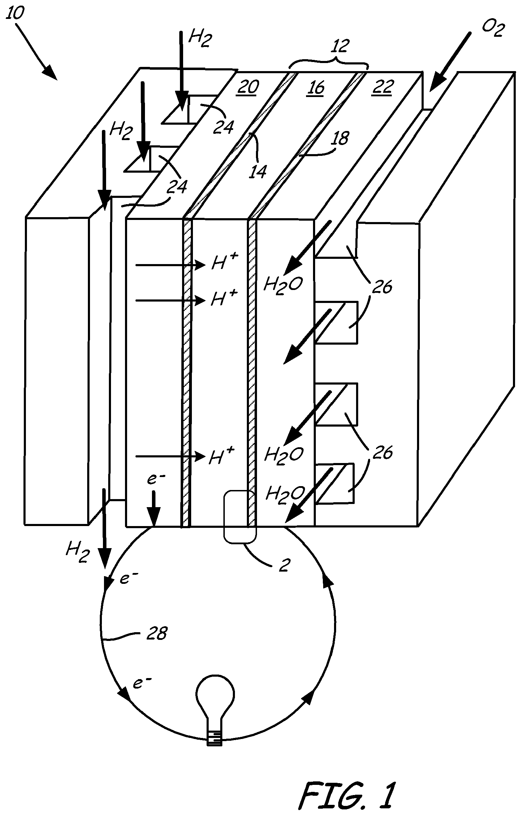

Fuel cells convert chemical energy to electrical energy using one or more fuel cell repeat units. FIG. 1 illustrates a perspective view of one example fuel cell repeat unit 10, which includes unitized electrode assembly (UEA) 12 (having anode catalyst layer (CL) 14, electrolyte 16, cathode catalyst layer (CL) 18, anode gas diffusion layer (GDL) 20 and cathode gas diffusion layer (GDL) 22), anode flow field 24 and cathode flow field 26. Fuel cell repeat unit 10 can have coolant flow fields adjacent to anode flow field 24 and cathode flow field 26. Coolant flow fields are not illustrated in FIG. 1.

Anode GDL 20 faces anode flow field 24 and cathode GDL 22 faces cathode flow field 26. Anode CL 14 is positioned between anode GDL 20 and electrolyte 16, and cathode CL 18 is positioned between cathode GDL 22 and electrolyte 16. This assembly, once bonded together by known techniques, is known as unitized electrode assembly (UEA) 12. In one example, fuel cell repeat unit 10 is a proton exchange membrane fuel cell (PEMFC) that uses hydrogen fuel (i.e., hydrogen gas) and oxygen oxidant (i.e., oxygen gas or air). It is recognized that fuel cell repeat unit 10 can use alternative fuels and/or oxidants.

In operation, anode GDL 20 receives hydrogen gas (H₂) by way of anode flow field 24. Anode CL 14, which contains a catalyst such as platinum, causes the hydrogen molecules to split into protons (H⁺) and electrons (e⁻). The protons and electrons travel to cathode CL 18; the protons pass through electrolyte 16 to cathode CL 18, while the electrons travel through external circuit 28, resulting in a production of electrical power. Air or pure oxygen (O₂) is supplied to cathode GDL 22 through cathode flow field 26. At cathode CL 18, oxygen molecules react with the protons and electrons from anode CL 14 to form water (H₂O) which then exits fuel cell 10, along with excess heat.

Electrolyte 16 is located between anode CL 14 and cathode CL 18. Electrolyte 16 allows movement of protons and water but does not conduct electrons. Protons and water from anode CL 14 can move through electrolyte 16 to cathode CL 18. Electrolyte 16 can be a liquid, such as phosphoric acid, or a solid membrane, such as a perfluorosulfonic acid (PFSA)-containing polymer or ionomer. PFSA polymers are composed of fluorocarbon backbones with sulfonate groups attached to short fluorocarbon side chains. Example PFSA polymers include Nafion® by E.I. DuPont, USA. Electrolyte 16 can be an absorption electrolyte or a non-absorption electrolyte. Absorption electrolytes include but are not limited to sulfuric acid and phosphoric acid. Non-absorption electrolytes include but are not limited to PFSA polymers and perchloric acid.

Anode CL 14 is adjacent to the anode side of electrolyte 16. Anode CL 14 includes a catalyst, which promotes electrochemical oxidation of fuel (i.e., hydrogen). Example catalysts for anode CL 14 include carbon supported platinum atoms. Alternatively, anode CL 14 can include the palladium catalytic nanoparticles described below with respect to cathode CL 18.

Cathode CL 18 is adjacent to the cathode side of electrolyte 16, and opposite anode CL 14. Cathode CL 18 includes a catalyst that promotes electrochemical reduction of oxidant (i.e., oxygen). As described further below, the catalyst includes palladium nanoparticles having an enhanced {100} structure.

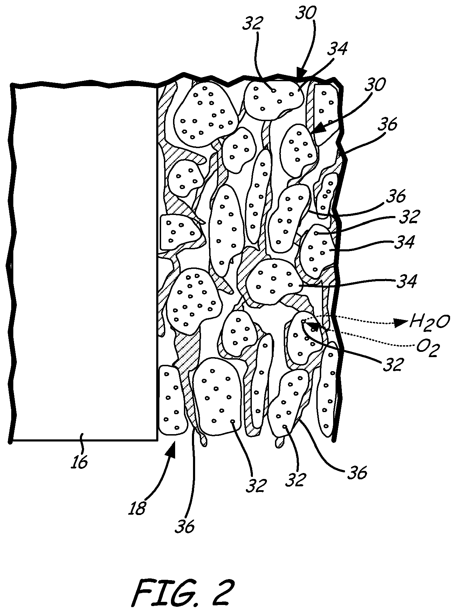

FIG. 2 is an enlarged view of cathode CL 18 of FIG. 1, which includes catalyst 30 (having palladium catalytic nanoparticles 32 and catalyst support 34) and ionomer 36. Ionomer 36 of cathode CL 18 contacts catalysts 30 to form a layer having palladium catalytic nanoparticles 32 finely dispersed throughout. Cathode CL 18 is a matrix of catalyst supports 34, ionomer 36 and palladium catalytic nanoparticles 32. The matrix allows electrons, protons, water and reactants to move through it.

Catalyst 30 of cathode CL 18 promotes electrochemical reduction of oxidant. As shown in FIG. 2, catalyst 30 includes palladium catalytic nanoparticles 32 supported by or on catalyst supports 34. Catalyst supports 34 are electrically conductive supports, such as carbon black supports.

Palladium catalytic nanoparticles 32 are distributed on catalyst supports 34. Palladium catalytic nanoparticles 32 are formed of palladium or a palladium alloy. The palladium alloy can be an alloy of palladium and at least one transition metal. Example transition metals include but are not limited to titanium, chromium, vanadium, manganese, iron, cobalt, nickel, copper, and zirconium. The palladium alloy can also be an alloy of palladium and at least one noble metal. Example noble meals include but are not limited to rhodium, iridium, platinum, and gold. Palladium catalytic nanoparticles 32 are used as the catalyst in cathode CL 18, and the majority of the surfaces of palladium catalytic nanoparticles 32 are exposed to the environment of cathode CL 18 and UEA 12 of FIG. 1. That is, palladium catalytic nanoparticles 32 are exposed to the UEA environment in order to promote the electrochemical reduction of oxidant.

In cathode CL 18, palladium nanoparticles 32 promote the formation of water according to the oxidation reduction reaction: O₂ + 4H⁺ + 4e⁻ → 2H₂O. Palladium catalytic nanoparticles 32 are only active when they are accessible to protons, electrons and the reactant. Ionomer 36 in cathode CL 18 connects electrolyte 16 to palladium catalytic nanoparticles 32 on an ionic conductor level. As illustrated in FIG. 2, ionomer 36 creates a scaffolding structure between catalyst supports 34 of catalyst 30. Ionomer 36 creates a porous structure that enables gas to travel through cathode CL 18 and water to be removed from cathode CL 18. Ionomer 36 also transfers protons from electrolyte 16 to active catalyst sites on palladium catalytic nanoparticles 32. Anode CL 14 can have the same structure as cathode CL 18.

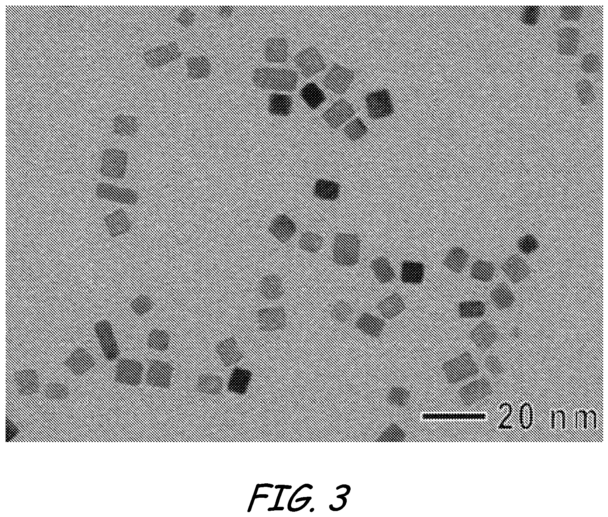

FIG. 3 is a transmission electron microscope (TEM) image of palladium catalytic nanoparticles 32. Palladium catalytic nanoparticles 32 have dimensions on the on the nanoscopic scale. In one example, palladium catalytic nanoparticles 32 have an edge length between about 2 nanometers and about 50 nanometers. In another example, palladium catalytic nanoparticles 32 have an edge length between about 3 nanometers and about 10 nanometers.

Palladium catalytic nanoparticles 32 are shape controlled to have a {100} enriched structure. Non-shape controlled palladium nanoparticles are typically cubo-octahedral in shape. At the particle size of interest (i.e., between 2 nanometers and 50 nanometers), a cubo-octahedral has at most about 10% to about 15% {100} surfaces. Palladium catalytic nanoparticles 32 contain a greater surface area of {100} surfaces compared to a cubo-octahedral nanoparticle. In one example, at least about 30% of the surface area of palladium catalytic nanoparticles 32 is bound by {100} surfaces. In another example, at least about 50% of the surface area of palladium catalytic nanoparticles 32 is bound by {100} surfaces. In a further example, at least about 70% of the surface area of palladium catalytic nanoparticles 32 is bound by {100} surfaces.

A cubic nanoparticle consists of six total surfaces, all of which are bound by {100} surfaces. Palladium catalytic nanoparticles 32 have a generally cubic shape. In one example, at least about 30% of the surfaces are bound by {100} surfaces. In another example, at least about 50% of the surfaces are bound by {100} surfaces. In a further example, at least about 70% of the surfaces are bound by {100} surfaces.

The activity of palladium nanoparticles is highly dependent on the facets or the surfaces of the nanoparticles. Regular or non-shape controlled palladium nanoparticles are susceptible to dissolution in the UEA environment. More specifically, non-shape controlled palladium is reactive at the potential cycling conditions of a typical fuel cell. During potential cycling, palladium oxidizes, dissolves and migrates away from cathode. The dissolved palladium reduces the ORR activity and may poison the electrolyte.

In contrast to non-shape controlled palladium nanoparticles, palladium catalytic nanoparticles 32 have a {100} enhanced structure. Palladium catalytic nanoparticles 32 are more active (i.e., have a higher ORR activity) than non-shape controlled palladium nanoparticles because of the increased number of {100} facets on palladium catalytic nanoparticles 32. As described above, non-shape controlled palladium nanoparticles are typically cubo-octahedral, and contain a maximum of about 10% to about 15% {100} surfaces. In one example, palladium catalytic nanoparticles 32 show an ORR activity that is about four- to about six-times higher than that of non-shape controlled palladium nanoparticles. As discussed above, palladium catalytic nanoparticles 32 can be formed of a palladium alloy. Alloying palladium with at least one additional transition metal or noble metal will further enhance the ORR activity of palladium catalytic nanoparticles 32.

The specific activity of palladium catalytic nanoparticles 32 is much greater than that of non-shape controlled palladium nanoparticles, and is comparable to or greater than that of carbon supported platinum catalysts. Platinum is a high cost noble metal. Palladium is less expensive than platinum. Using palladium catalytic nanoparticles 32 reduces the material costs of the UEA while achieving a comparable activity.

As illustrated in the following example, palladium catalytic nanoparticles 32 having {100} enhanced structures are more active than palladium octahedron nanoparticles and non-shape controlled palladium nanoparticles. Further, palladium catalytic nanoparticles 32 have an activity comparable to or greater than that of carbon supported platinum. The following example is intended as an illustration only, since numerous modifications and variations within the scope of the present invention will be apparent to one skilled in the art.

### EXAMPLE

Four electrodes were prepared. Electrode A contained carbon supported cubic palladium nanoparticles. The cubic palladium nanoparticles were shaped-controlled nanoparticles having essentially a total of six faces, each of which was bound by a {100} surface.

Electrode B contained carbon supported octahedron palladium nanoparticles. The octahedron palladium nanoparticles were shape-controlled nanoparticles having essentially a total of eight faces, each of which was bound by a {111} surface.

Electrode C contained carbon supported non-shape controlled palladium nanoparticles. As described above, typically, non-shape controlled palladium nanoparticles have a cubo-octahedral shape. The catalyst of electrode C was purchased from BASF SE of Ludwigshafen, Germany.

Electrode D contained carbon supported non-shape controlled platinum nanoparticles. The catalyst of electrode D was purchased from TKK of Japan.

Rotating disk electrode (RDE) experiments were conducted for each electrode in 0.1 M HClO₄ (a non-absorption electrolyte). The electrodes were rotated at 1600 rotations per minute (RPM). The specific activity was calculated at 0.9 volts (V) and normalized with respect to the electrochemical active area of the catalyst. The results of the experimental runs are presented in Table 1 below.

**TABLE 1: RDE results in HClO₄**

| Electrode | Catalyst | Specific activity at 0.9 V (mA/cm²) |
|---|---|---|
| A | Pd cube/C | 0.3 |
| B | Pd octahedron/C | 0.03 |
| C | Pd/C (Purchased) | 0.05 |
| D | Pt/C (Purchased) | 0.24 |

As illustrated in Table 1, non-shape controlled palladium nanoparticles (Electrode C) (i.e., having a maximum of about 10%-15% {100} surfaces) are less active than non-shape controlled platinum nanoparticles (Electrode D); palladium nanoparticles have an octahedron shape (Electrode B) (i.e., having about 0% {100} surfaces) are even less active. Palladium nanoparticles having a cubic shape (Electrode A) (i.e., having about 100% {100} surfaces) are more active than each of the other catalysts tested, including the non-shape controlled platinum nanoparticles. Comparing Electrodes A, B and C shows that increasing the percentage of {100} surfaces improves the specific activity.

RDE experiments were also conducted for an absorption electrolyte. Electrodes E, F and G were prepared according to Table 2 below. Electrode E contained the same catalyst as Electrode A (carbon supported cubic palladium nanoparticles), Electrode F contained the same catalyst as Electrode B (carbon supported octahedral palladium nanoparticles), and Electrode G contained the same catalyst as Electrode C (carbon supported non-shape controlled palladium). The electrodes were rotated at 1600 RMP in 0.1 M H₂SO₄ solution that was saturated with O₂. The specific activity was calculated at 0.85 V. The results of the experimental runs are presented in Table 2.

**TABLE 2: RDE results in H₂SO₄**

| Electrode | Catalyst | Specific activity at 0.85 V (mA/cm²) |
|---|---|---|
| E | Pd cube/C | 0.26 |
| F | Pd octahedron/C | 0.02 |
| G | Pd/C (Purchased) | 0.06 |

As illustrated in Table 2, the cubic palladium (Electrode E) was more active than the octahedral palladium (Electrode F) and the non-shape controlled palladium (Electrode G). Comparing Electrode E (100% {100} surfaces) to Electrode F (0% {100} surfaces) and Electrode G (10%-15% {100} surfaces) shows that increasing the percentage of {100} surfaces improves the specific activity. Further, comparing Table 1 and Table 2 shows that cubic palladium nanoparticles have a higher activity than octahedral palladium nanoparticles and non-shape controlled palladium nanoparticles when used with either a non-absorption electrolyte or an absorption electrolyte.

Although the present invention has been described with reference to preferred embodiments, workers skilled in the art will recognize that changes may be made in form and detail. The scope of the invention is defined by the claims.

## Claims

1. A unitized electrode assembly (UEA) (12) for a fuel cell (10), the UEA (12) comprising:
an anode electrode (14);
a cathode electrode (18);
an electrolyte (16) positioned between the cathode electrode (18) and the anode electrode (14); **characterized in that**
the cathode electrode (14) is a matrix of catalyst supports (34), ionomer (36) and palladium catalytic nanoparticles (32), wherein
the catalyst supports (34) are carbon black supports, wherein
the palladium catalytic nanoparticles (32) contain at least 70% {100} surfaces by area; and wherein
a majority of a surface area of the palladium catalytic nanoparticles (32) is exposed to the UEA (12) environment.

2. The UEA (12) of claim 1, wherein the palladium catalytic nanoparticles (32) have an edge length between 2 nanometers and 50 nanometers, and preferably, wherein the palladium catalytic nanoparticles (32) have an edge length between 3 nanometers and 10 nanometers.

3. The UEA (12) of claim 1, wherein the electrolyte (16) is a non-absorbing electrolyte.

4. The UEA (12) of claim 1, wherein the electrolyte (16) is a polymer membrane.

## Patentansprüche

1. Modularisierte Elektrodenanordnung (UEA) (12) für eine Brennstoffzelle (10), wobei die UEA (12) umfasst:
eine Anodenelektrode (14);
eine Katodenelektrode (18);
einen Elektrolyt (16), der zwischen der Katodenelektrode (18) und der Anodenelektrode (14) positioniert ist, **dadurch gekennzeichnet, dass**
die Katodenelektrode (14) eine Matrix von Katalysatorträgern (34), lonomer (36) und katalytischen Palladiumnanopartikeln (32) ist, wobei
die Katalysatorträger (34) Rußträger sind, wobei
die katalytischen Palladiumnanopartikel (32) mindestens 70 % {100} Oberflächen nach Bereich enthalten und wobei
eine Mehrheit des Oberflächenbereichs der katalytischen Palladiumnanopartikel (32) der Umgebung der UEA (12) ausgesetzt ist.

2. UEA (12) nach Anspruch 1, wobei die katalytischen Palladiumnanopartikel (32) eine Kantenlänge zwischen 2 Nanometer und 50 Nanometer aufweisen und wobei die katalytischen Palladiumnanopartikel (32) vorzugsweise eine Kantenlänge zwischen 3 Nanometer und 10 Nanometer aufweisen.

3. UEA (12) nach Anspruch 1, wobei der Elektrolyt (16) ein nicht absorbierender Elektrolyt ist.

4. UEA (12) nach Anspruch 1, wobei der Elektrolyt (16) eine Polymermembran ist.

## Revendications

1. Ensemble d'électrodes par éléments préfabriqués (UEA) (12) pour une pile à combustible (10), l'UEA (12) comprenant :
une électrode d'anode (14) ;
une électrode de cathode (18) ;
un électrolyte (16) positionné entre l'électrode de cathode (18) et l'électrode d'anode (14) ; **caractérisé en ce que**
l'électrode de cathode (14) est une matière composite de supports de catalyseur (34), d'ionomère (36) et de nanoparticules catalytiques de palladium (32), dans lequel
les supports de catalyseur (34) sont des supports de noir de carbone, dans lequel
les nanoparticules catalytiques de palladium (32) contiennent au moins 70% de surfaces {100} par zone ; et dans lequel
une majorité d'une superficie des nanoparticules catalytiques de palladium (32) est exposée à l'environnement d'UEA (12).

2. UEA (12) selon la revendication 1, dans lequel les nanoparticules catalytiques de palladium (32) ont une longueur de bord entre 2 nanomètres et 50 nanomètres,
et de préférence, dans lequel les nanoparticules catalytiques de palladium (32) ont une longueur de bord entre 3 nanomètres et 10 nanomètres.

3. UEA (12) selon la revendication 1, dans lequel l'électrolyte (16) est un électrolyte non absorbant.

4. UEA (12) selon la revendication 1, dans lequel l'électrolyte (16) est une membrane de polymère.
